# EUROPEAN PATENT SPECIFICATION

(11) **EP 1 721 843 B1**
(45) Date of publication and mention of the grant of the patent: **06.10.2010**
(21) Application number: 05076094.1
(22) Date of filing: 10.05.2005
(51) Int. Cl.: B65G 25/06

(54) **Reciprocating floor conveyor with splash guard bearings**
Hin- und hergehender Flurförderer mit Spritzschutz aufweisenden Gleitlagern
Convoyeur de sol coulissant comprenant des paliers d'appui avec garde-boue

(43) Date of publication of application: 15.11.2006
(73) Proprietor: Keith Investments LLC, Madras, OR 97741 (US)
(72) Inventor: Foster, Raymond Keith, Oregon 97741 (US)
(74) Representative: Hoorweg, Petrus Nicolaas

(56) References cited:
- EP-A- 1 524 212
- US-A- 4 899 870
- US-A- 5 335 778
- US-B1- 6 889 819

## Description

This invention relates to a reciprocating slat conveyor according to the preamble of claim 1. More particularly, it relates to a system of bearings for the conveyor slats in which most of the bearing length is occupied by bearings that are adapted to guard against road water splashing upwardly against the undersides of the conveyor slats.

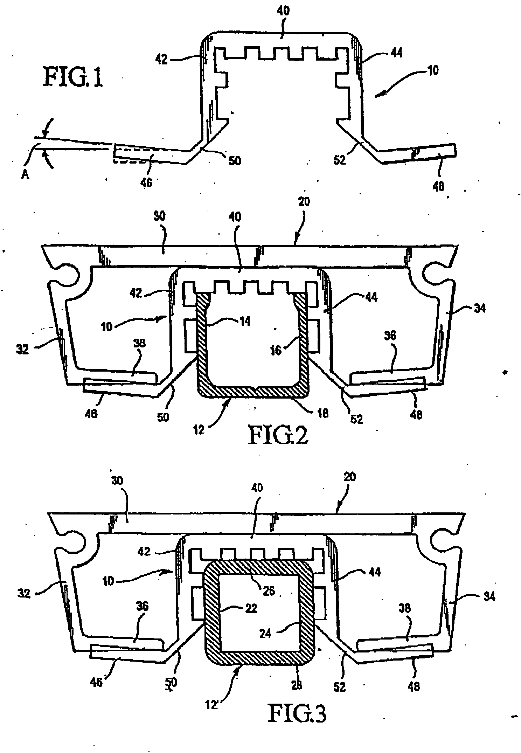

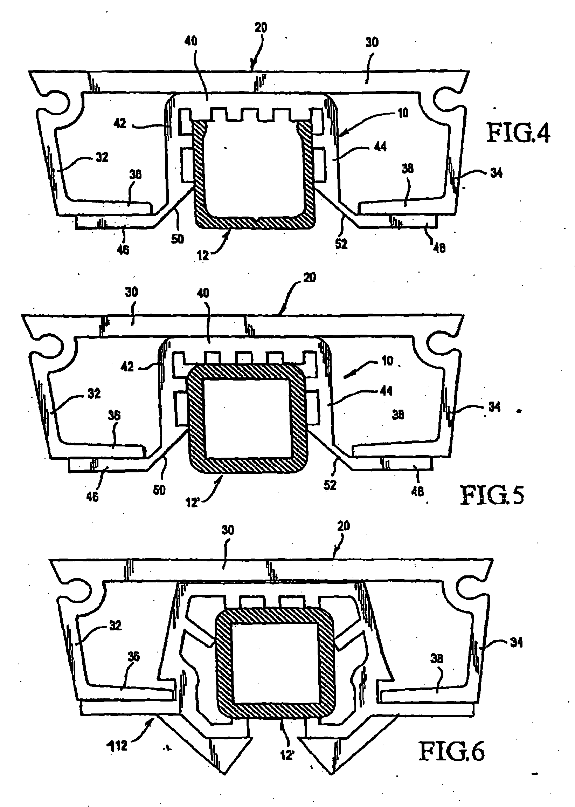

Such a reciprocating slat conveyor is disclosed by U.S. Patent No. 4,899,870, granted February 13, 1990, and entitled Reciprocating Floor Conveyor With Snap-On Floor Members. Longitudinal guide beams that support the bearings are designated 14 in U.S, Patent No. 4,899,870 (Fig. 1). The bearings are designated 122 (Figs. 6-8). Special hold-down members are designated 80 (Figs. 9-13). The bearings 122 are positioned on the guide beams 14 where the guide beams 14 cross over and are secured to transverse support beams 12. In this system, there are longitudinal spaces between the bearings 122 that are open and when the conveyor is used in a truck or trailer, water off the road can and will splash upwardly against the underneath sides of the conveyor slats in the open regions. There is a need to substantially close the open regions so as to guard against the upward splash of road water against the underneath sides of the conveyor slats. It is the principal object of this invention to address this need by the use of both old and new technology.

This object is achieved by the reciprocating slat conveyor of claim 1.

The old technology includes continuing the use of the transverse support beams, the longitudinal guide beams, the bearings and/or special hold-down members, and conventional conveyor slats. Examples of all these components are disclosed in the aforementioned U.S. Patent No. 4,899,870. The present invention provides for use with these known components a unique splash guard bearing that both functions as a bearing and guards against the upward splash of road water against the underneath sides of the conveyor slats.

The subject invention is an improvement on or a variation of the system disclosed by U.S. Patent Application No. 2004/0069599, filed May 29, 2003, by Manfred W. Quaeck, and entitled Sealless Reciprocating Slat Conveyor Having Vertically Installable Components.

The reciprocating slat conveyor of the present invention comprises a plurality of laterally spaced apart guide beams, a plurality of hold-down bearings on each guide beam, and at least one anti-splash bearing on each guide beam, positioned endwise of the hold-down bearing. Each conveyor slat has a top, opposite sidewalls, and bottom flanges extending laterally inwardly from the sidewalls. An inner space is defined in each conveyor slat, below the top, between the sidewalls and above the bottom flanges. Each hold-down bearing is positioned partially within the inner space of the slat. Each hold-down bearing has a lower portion holding it against vertical movement up off its guide beam and an upper portion that is within the inner space of the slat and has downwardly directed surfaces that confront and are positioned directly above inner edge portions of the bottom flanges. The anti-splash bearing has an upper portion that rests on the guide beam, opposite side portions that depend downwardly from the upper portion, and laterally outwardly projecting flaps. The flaps extend laterally outwardly from the side portions of the anti-splash bearing, below the bottom flanges of the conveyor slat. The flaps block upward movement of water from below the conveyor to the undersides of the slats in the length regions of the conveyor where the anti-splash bearings are located.

Other objects, advantages and features of the invention will become apparent from the description of the best mode set forth below, from the drawings, from the claims, and from the principles that are embodied in the specific structures that are illustrated and described herein.

### Brief Description of the Several Views of the Drawing

Like reference numerals are used to designate like parts throughout the several views of the drawing, and:
Fig. 1 is an end view of an anti-splash bearing, including on the left side of the view a solid line showing of the normal position of the flap and a broken line showing of the position taken by the flap when it is bent downwardly by the bottom flange of the conveyor slat; .
Fig. 2 is an end view of a conveyor slat, an anti-splash bearing and a guide beam; with the flaps on the bearing shown in their natural position;
Fig. 3 is a view like Fig, 2, but showing a tubular form of guide beam;
Fig. 4 is a view like Fig. 2, but showing the flaps on the anti-splash bearing moved downwardly by the bottom flanges on the conveyor slats;
Fig. 5 is a view like Fig. 3, but showing the flaps on the anti-splash bearing moved downwardly by contact with the bottom flanges on the conveyor slat, such view being taken substantially along line 5-5 of Fig. 8;
Fig. 6 is a cross-sectional view taken substantially along line 6-6 of Fig. 7;
Fig. 7 is a fragmentary top plan view showing a hold-down bearing between the end portions of two anti-splash bearings; and
Fig. 8 is a side elevational view of the assembly shown by Fig. 7, such view further showing the placement of the hold-down bearing at the intersection of a guide beam and a transverse support beam.

### Detailed Description of the Invention

Fig. 1 is an end view of a preferred embodiment of the anti-splash bearing 10. As will hereinafter be described in more detail, the bearing 10 is preferably several feet in length and is positioned between two hold-down bearings 112. As stated above, my U.S. Patent No. 4,899,870 shows a system of transverse support beams, longitudinal guide beams, hold-down bearings on the guide beams where they cross over a transverse beam, and conveyor slats. Fig. 2 shows a guide beam 12 that has a pair of sidewalls 14, 16 and a bottom wall 18, together forming a channel shaped cross section. In this view the anti-splash bearing is shown in the position that it occupies when it is on the guide beam 12, below the floor slat 20. Fig. 3 is like Fig, 2 except that the guide beam 12' is a tubular member, measuring about 2,5 cm by 2,5 cm (one inch by one inch) in section, for example. Tubular beam 12' includes sidewalls 22, 24, a top wall 26 and a bottom wall 28.

Conveyor slat 20 has a top wall 30, opposite sidewalls 32, 34 and bottom flanges 36, 38.

The anti-splash bearing 10 has a top 40, opposite sidewalls 42, 44 that depend downwardly from the top wall 40, and flaps 46, 48 that are connected to the sidewalls 42, 44, preferably by diagonal hinge sections 50, 52. As illustrated, the hinge sections 50, 52 are preferably thinner than the sidewalls 42, 44 and the flaps 46, 48. This encourages most if not all bending to occur in the regions of the hinge sections 50, 52.

Comparing Fig. 2 with Fig. 4 and Fig. 3 with Fig. 5, when the conveyor slat 20 is set down on the top wall 40 of the anti-splash bearing 10, the bottom flanges 36, 38 contact and bend downwardly the flaps 46, 48, The flaps 46, 48 are bent downwardly from the positions shown in Figs. 1-3 to the positions shown in Figs. 4 and 5. Fig. 1 shows that the bending occurs through an acute angle a which may be about 2-4 degrees. The contact of the flaps 46, 48 by the bottom flanges 36, 38 is what bends the flaps 46, 48 downwardly. The bending stores in the flaps 46, 48 a certain amount of the spring energy that wants to move the flaps back up into their at rest position. Because such movement is prevented by the bottom flanges 36, 38, the flaps 46, 48 are spring loaded into contact with the lower surfaces of the bottom flanges 36, 38, The anti-splash bearings 10 are not free to slide on the guide beams 12, 12' and so the bottom flanges 36, 38 slide along the flaps 46, 48 as the slats 20 reciprocate. Anti-splash bearing 10 is made from a self-lubricating plastic material and so sliding movement of the bottom flanges 36, 38 along the flaps 46, 48 is facilitated.

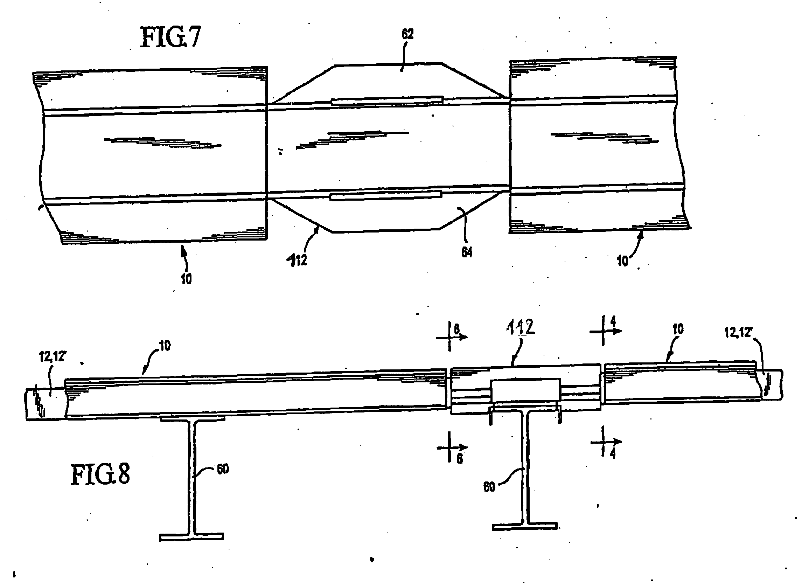

Figs. 7 and 8 show a pair of anti-splash bearings 10 extending in opposite directions from a hold-down bearing 112. In preferred form, each anti-splash bearing 10 extends lengthwise onto the next hold-down bearing 112. Accordingly, the full length of the guide beam 12, 12' is occupied by either an anti-splash bearing 10 or a hold-down bearing 112.

In Fig. 8, the guide beams 12, 12' are shown crossing over transverse support beams 60. Each hold-down bearing 112 is positioned where a guide beam 12, 12' crosses over a transverse support beam 60. In this respect, reference is made to Fig. 7 of the aforementioned U.S. Pat. No. 4, 899, 870, and in particular to Fig. 7 of that patent. As illustrated and described in U.S. Patent No. 4,899,870, the hold-down bearing is constructed so that it is locked against upward movement off from the guide beam 12, 12' and is locked against sliding movement along the guide beam 12, 12'. The construction that accomplishes this locking action is well described in U.S. Pat. No. 4,899,870 and so it will not be repeated herein.

The construction of the hold-down bearing 112 can vary. For example, it can take the form of the hold-down bearing showing in Figs. 9-13 of U.S. Pat. No. 4,899,870.

Bearing 112 has side flanges 62, 64 that provide a substantial amount of area that will block the upward movement of water in the regions of the bearing 112. As disclosed in U.S. Pat. No. 4,899,870, the hold-down bearing shown in Figs. 9-13 of that patent has side flaps 100, 102 that also serve to block the upward flow of water against the underneath sides of the slats 20. As previously described, in the region of the anti-splash bearings 10, the flaps 46, 48 block the upward movement of water into the underneath sides of the slats 20.

A few of the hold-down bearings 112 spaced along the guide beams 12, 12' will provide sufficient hold-down power to prevent the unwanted upper movement of the conveyor slats 20 off from the guide beams 12, 12' because the conveyor slats 20 are held downwardly by the hold-down bearings 112, they will in turn block the unwanted upward movement of the anti-splash bearings 10 off from the guide beams 12, 12', even though the spring energy in flaps 46, 48 will want to move the slats 20 upwardly. The anti-splash bearings 10 are prevented from moving lengthwise along the guide beams 12, 12' by their positioning between a pair of hold-down bearings 112. The hold-down bearings 112 are locked against sliding movement along the beams 12, 12'. Accordingly, the anti-splash bearings 10 cannot move because their movement are blocked by the hold-down bearings 112.

Of course, given the information that is set forth above, one could construct other embodiments of the present invention. The systems which have been described are all presented for purposes of illustration and not limitation, the scope of protection of the invention being defined by the appended claims.

## Claims

1. A reciprocating slat conveyor, comprising:
a plurality of laterally spaced apart guide beams (12, 12');
a pair of hold-down bearing (112) on each guide beam spaced apart lengthwise of the guide beam;
a conveyor slat (20) on each guide beam, each conveyor slat having a top (30), opposite sidewalls (32, 34), and bottom flanges (36, 38) extending laterally inwardly from the sidewalls, with an inner space being defined in each conveyor slat, below the top, between the sidewalls and above the bottom flanges;
each said hold-down bearing being positioned partially within the inner space of its slat, and having a lower portion holding it against vertical movement up off its guide beam and an upper portion that is within the inner space of the slat and has downwardly directed surfaces that confront and are positioned directly above inner edge portions of the bottom flanges (36, 38);
**characterized in that** a substantially continuous anti-splash bearing (10) is positioned on each guide beam between the two hold-down bearings, the length of the anti-splash bearing being such that it is prevented from moving lengthwise along the guide beam by the pair of hold-down bearings, which are blocking a sliding movement of the anti-splash bearing along the guide beam; and that
each anti-splash bearing has an upper portion (40) that rests on the guide beam, opposite side portions (42, 44) that depend downwardly from the upper portion, and laterally outwardly projecting flaps (46, 48) that extend laterally outwardly from the side portions, below the bottom flanges (36, 38) of the conveyor slat, wherein the flaps block upper movement of water from below the conveyor to the underneath sides of the slats in the length regions of the conveyor where the anti-splash bearings are located.

2. The reciprocating slag conveyor of claim 1, wherein the laterally outwardly projecting flaps (45, 48) are in the nature of leaf springs that are formed to slope upwardly as they extend outwardly, and wherein the conveyor slat is on the anti-splash bearings, the bottom of the floor slats contact the flaps on the anti-splash bearings and bend them downwardly, storing spring energy in the flaps that act to bias the flaps upwardly against the bottom flanges on the conveyor slats.

3. The reciprocating slat conveyor of claim 1 or 2, wherein the anti-splash bearings have laterally outwardly and sloping lower regions (50, 52) that connect the side portions of the anti-splash bearings with the laterally outwardly projecting flaps.

4. The reciprocating slat conveyor of claim 3, wherein the sloping regions are thinner than the side portions of the hold-down bearing and are thinner than the laterally outwardly projecting flaps, said thinner regions serving as hinge regions wherein most of the bending occurs when the contact between the bottom flanges of the slats bend the outwardly projecting flaps downwardly.

5. The reciprocating slat conveyor of claim 1, wherein the hold-down bearings have lower portions that block upward movement of water from below the conveyor to the underneath sides of the slats in the regions of the hold-down bearings.

## Patentansprüche

1. Sich hin- und herbewegender Plattenbandförderer, der aufweist:
eine Vielzahl von seitlich beabstandeten Führungsbalken (12, 12');
ein Paar Haltelager (112) auf jeder Seite eines Führungsbalkens, die in Längsrichtung des Führungsbalkens voneinander beabstandet sind;
eine Förderplatte (20) auf jedem Führungsbalken;
wobei jede Förderplatte eine Oberseite (30), abgewandte Seitenwände (32, 34) und Bodenflansche (36, 38) aufweist, die sich von den Seitenwänden seitlich nach innen erstrecken, wobei ein Innenraum in jeder Förderplatte unterhalb der Oberseite, zwischen den Seitenwänden und über den Bodenflanschen definiert ist;
wobei jedes Haltelager teilweise im Innenraum der Platte davon positioniert ist,
und einen unteren Abschnitt aufweist, der es gegen die vertikale Bewegung nach oben außerhalb des Führungsbalkens davon hält, und einen oberen Abschnitt, der sich im Innenraum der Platte befindet und nach unten gerichtete Flächen aufweist, die den Innenkantenabschnitten der Bodenflasche (36, 38) gegenüberstehen und direkt darüber angeordnet sind;
**dadurch gekennzeichnet, dass**
ein im Wesentlichen durchgehendes Spritzschutzlager (10) auf jedem Führungsbalken zwischen den beiden Haltelagerungen angeordnet ist, wobei die Länge des Spritzschutzlagers dergestalt ist, dass es an der Bewegung in Längsrichtung entlang des Führungsbalkens durch die beiden Haltelager gehindert wird, die eine Gleitbewegung des Spritzschutzlagers entlang des Führungsbalkens blockieren; und dass
jedes Spritzschutzlager einen oberen Abschnitt (40) aufweist, der auf dem Führungsbalken aufliegt, abgewandte Seitenabschnitte (42, 44), die vom oberen Abschnitt nach unten abhängen, und seitlich nach außen hervorstehende Klappen (46, 48), die von den Seitenpositionen seitlich nach außen verlaufen,
unterhalb der Bodenflansche (36, 38) der Förderplatte, wobei die Klappen das Eindringen von Wasser von unterhalb des Förderers nach oben in die darunter liegenden Seiten der Platten in den Längsabschnitten des Förderers verhindern, in denen sich die Spritzschutzlager befinden.

2. Sich hin- und herbewegenden Plattenförderer gemäß Anspruch 1, wobei die seitlich nach außen hervorstehenden Klappen (45, 48) im Prinzip Blattfedern sind, die im Verlauf nach außen in einer nach oben führenden Schräge ausgebildet sind, und wobei die Förderplatte sich auf den Spritzschutzlagern befindet, wobei die Unterseite der Bodenplatten die Klappen auf den Spritzschutzlagern berührt und sie nach unten biegt, wobei die Federenergie in den Klappen gespeichert wird, so dass die Klappen noch oben gegen die Bodenflansche auf den Förderplatten vorgespannt werden.

3. Sich hin- und herbewegender Plattenförderer gemäß Anspruch 1 oder 2, wobei die Spritzschutzlager seitlich nach außen und schräg verlaufende unteren Bereiche (50, 52) aufweisen, die die Seitenabschnitte der Spritzschutzlager mit den seitlich nach außen hervorstehenden Klappen verbinden.

4. Sich hin- und herbewegender Plattenförderer gemäß Anspruch 3, wobei die schrägen Bereiche dünner sind als die Seitenbereiche der Haltelager und dünner als die nach außen hervorstehenden Klappen, wobei die dünneren Bereiche als Gelenkbereiche fungieren, in denen der Großteil der Biegung auftritt, wenn die nach außen verlaufenden Klappen durch den Kontakt zwischen den Bodenflanschen der Platten nach unten gebogen werden.

5. Sich hin- und herbewegender Plattenförderer gemäß Anspruch 1, wobei die Haltelager untere Abschnitte aufweisen, die das Eindringen von Wasser von unterhalb des Förderers nach oben in die Seiten unterhalb der Platten in die Haltelagerbereiche verhindern.

## Revendications

1. Transporteur à secousses à palettes, comprenant :
une pluralité de poutres de guidage espacées latéralement (12, 12') ;
une paire de paliers de retenue verticale (112) sur chaque poutre de guidage espacés dans le sens de la longueur de la poutre de guidage ;
une palette de convoyeur (20) sur chaque poutre de guidage, chaque palette de convoyeur ayant une extrémité supérieure (30), des parois opposées (32, 34), et des brides inférieures (36, 38) s'étendant latéralement vers l'intérieur à partir des parois latérales, un espace intérieur étant défini dans chaque palette de convoyeur, sous l'extrémité supérieure, entre les parois latérales et au-dessus des brides inférieures ;
chacun desdits paliers de retenue verticale étant positionné partiellement dans l'espace intérieur de sa palette, et ayant une partie inférieure l'empêchant de se déplacer verticalement vers le haut en dehors de sa poutre de guidage et une partie supérieure qui est à l'intérieur de l'espace intérieur de la palette et possède des surfaces dirigées vers le bas qui se font face et sont positionnées directement au-dessus de parties de bord intérieures des brides inférieures (36, 38) ;
**caractérisé en ce qu'**un palier pare-éclaboussure sensiblement continu (10) est positionné sur chaque poutre de guidage entre les deux paliers de retenue verticale, la longueur du palier pare-éclaboussure étant telle qu'il est empêché de se déplacer dans le sens de la longueur le long de la poutre de guidage par la paire de paliers de retenue verticale, qui empêchent un mouvement coulissant du palier pare-éclaboussure le long de la poutre de guidage ; et **en ce que**
chaque palier pare-éclaboussure possède une partie supérieure (40) qui repose sur la poutre de guidage, des parties latérales opposées (42, 44) qui pendent vers le bas à partir de la partie supérieure, et des volets qui font saillie latéralement vers l'extérieur (46, 48) qui s'étendent latéralement vers l'extérieur à partir des parties latérales, sous les brides inférieures (36, 38) de la palette de convoyeur, où les volets bloquent le mouvement supérieur de l'eau à partir du dessous du convoyeur jusqu'aux côtés sous-jacents des volets dans les régions longitudinales du convoyeur où les paliers pare-éclaboussure sont situés.

2. Transporteur à secousses à palettes selon la revendication 1, où les volets faisant saillie latéralement vers l'extérieur (45, 48) sont du type à ressorts à lames qui sont formés pour s'incliner vers le haut à mesure qu'ils s'étendent vers l'extérieur, et où la palette de convoyeur repose sur les paliers pare-éclaboussure, le fond des palettes de sol est en contact avec les volets sur les paliers pare-éclaboussure et les courbe vers le bas, en conservant l'énergie de ressort dans les volets qui agissent pour pousser les volets vers le haut contre les brides inférieures sur les palettes de convoyeur.

3. Transporteur à secousses à palettes selon la revendication 1 ou 2, où les paliers pare-éclaboussure possèdent des régions inférieures inclinées latéralement vers l'extérieur (50, 52) qui relient les parties latérales des paliers pare-éclaboussure avec les volets faisant saillie latéralement vers l'extérieur.

4. Transporteur à secousses à palettes selon la revendication 3, où les régions inclinées sont plus fines que les parties latérales du palier de retenue verticale et sont plus fines que les volets faisant saillie latéralement vers l'extérieur, lesdites régions plus fines servant de régions d'articulation où la majeure partie de la courbure apparaît quand le contact entre les brides inférieures des palettes courbe les volets faisant saillie vers l'extérieur vers le bas.

5. Transporteur à secousses à palettes selon la revendication 1, où les paliers de retenue verticale possèdent des parties inférieures qui bloquent le mouvement vers le haut de l'eau à partir du dessous du convoyeur jusqu'aux côtés sous-jacents des palettes dans la région des paliers de retenue verticale.
